(19) Europäisches Patentamt
European Patent Office
Office européen des brevets

(11) EP 3 154 340 B1

(12) **FASCICULE DE BREVET EUROPEEN**

(45) Date de publication et mention de la délivrance du brevet:
**15.08.2018 Bulletin 2018/33**

(21) Numéro de dépôt: **15727024.0**

(22) Date de dépôt: **11.06.2015**

(51) Int Cl.:
***A01N 25/00** (2006.01)* ***A01N 43/16** (2006.01)*
***A01P 11/00** (2006.01)*

(86) Numéro de dépôt international:
**PCT/EP2015/063025**

(87) Numéro de publication internationale:
**WO 2015/189318 (17.12.2015 Gazette 2015/50)**

(54) **COMPOSITION COMPRENANT DE LA BROMADIOLONE, APPÂT RODONTICIDE ET PROCÉDÉ DE LUTTE CONTRE DES RONGEURS CIBLES NUISIBLES**

BROMADIOLON-ENTHALTENDE ZUSAMMENSETZUNG, NAGETIER-KÖDER SOWIE VERFAHREN ZUR BEKÄMPFUNG VON NAGERSCHÄDLINGEN

BROMADIOLONE CONTAINING COMPOSITION, RODENTICIDAL BAIT AND PROCESS FOR CONTROLLING TARGET RODENT PESTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.06.2014 FR 1455445**

(43) Date de publication de la demande:
**19.04.2017 Bulletin 2017/16**

(73) Titulaires:
- **Liphatech**
  **47480 Pont-du-Casse (FR)**
- **Vetagro-Sup**
  **69280 Marcy l'Etoile (FR)**

(72) Inventeurs:
- **CARUEL, Hervé**
  **F-47310 Moncaut (FR)**
- **ESPANA, Bernadette**
  **F-69280 Marcy l'Etoile (FR)**
- **BESSE, Stéphane**
  **F-69340 Francheville (FR)**
- **LATTARD, Virginie**
  **F-69009 Lyon (FR)**
- **BENOIT, Etienne**
  **F-69009 Lyon (FR)**

(74) Mandataire: **Cabinet BARRE LAFORGUE & associés**
**35, rue Lancefoc**
**31000 Toulouse (FR)**

(56) Documents cités:
**EP-A1- 2 090 164 EP-A2- 0 147 052**

- **HUNTER K ET AL: "Determination of diastereoisomers of bromadiolone, an anticougulant rodenticide, in animal tissues by high-performance liquid chromatography", JOURNAL OF CHROMATOGRAPHY, ELSEVIER SCIENCE PUBLISHERS B.V, NL, vol. 435, 1 janvier 1988 (1988-01-01), pages 83-95, XP026695119, ISSN: 0021-9673, DOI: 10.1016/S0021-9673(01)82165-8 [extrait le 1988-01-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 154 340 B1

## Description

L'invention concerne le domaine technique de lutte contre le développement excessif de populations de rongeurs cibles nuisibles.

Il est connu d'utiliser des pièges à rongeurs cibles nuisibles permettant de prélever un petit nombre d'individus d'une espèce de rongeur cible nuisible. On connait aussi des appâts rodonticides faisant office de poison pour des rongeurs cibles nuisibles.

On connait (p.ex. EP2090164) en particulier des appâts rodonticides comprenant de la bromadiolone et permettant de lutter contre des rongeurs nuisibles. Il s'agit en particulier d'appâts à base d'avoine décortiquée et comprenant aussi de la bromadiolone dans une proportion massique de 50 mg par kg (0,005 %, 50 ppm) d'appât, du benzoate de dénatonium et un colorant.

De tels appâts posent des problèmes lorsqu'ils sont mis à la disposition des populations de rongeurs nuisibles et sont susceptibles d'être consommés par des animaux autres que des rongeurs nuisibles. Ils peuvent par exemple être consommés par des animaux domestiques, des animaux de compagnie. Ils peuvent aussi être accidentellement consommés par des humains.

En outre, une quantité importante de la bromadiolone de ces appâts rodonticides peut être ingérée secondairement par des animaux -notamment par des oiseaux- prédateurs ou charognards de rongeurs nuisibles et notamment de rongeurs nuisibles affaiblis ayant consommé un tel appât rodonticide. Cette consommation dite secondaire est susceptible d'entrainer à terme la mort de ces animaux prédateurs ou charognards qui peuvent être des animaux appartenant à des espèces protégées.

On connait aussi de EP 0 147 052 une composition rodonticide comprenant à titre de substance rodonticide les isomères de la bromadiolone les moins dangereux pour des espèces non-cibles, c'est-à-dire les isomères 1-(4'-bromobiphenyl-4-yl)-3-(4-hydroxycoumarin-3-yl)-(1S,3R)-propanol et 1-(4'-bromobiphenyl-4-yl)-3-(4-hydroxycoumarin-3-yl)-(1R,3S)-propanol. EP 0 147 052 précise que ces isomères les moins dangereux pour les espèces non-cibles sont retenus de façon moins persistante dans les tissus de mammifères non-rongeurs ou des espèces d'oiseaux susceptibles de consommer de telles compositions d'appât rodonticide ou des carcasses de rongeurs empoisonnés. Une telle composition rodonticide comprend sensiblement de l'ordre de 100 % de stéréo-isomère de la bromadiolone le moins retenu dans les tissus de mammifères non-rongeurs et d'espèces d'oiseaux consommant de telles compositions d'appât rodonticide ou des carcasses de rongeurs empoisonnés.

L'invention vise donc à pallier les inconvénients des compositions rodonticides connues en proposant un appât rodonticide et un procédé de lutte contre des rongeurs cibles nuisibles qui sont efficaces pour contrôler les populations de rongeurs nuisibles et qui permettent cependant de limiter les risques d'empoisonnement primaire d'un humain consommant accidentellement un tel appât rodonticide et les risques d'empoisonnement secondaire d'animaux non-cibles -notamment de mammifères domestiques, tels que des animaux de compagnie, ou sauvages -notamment des renards ou d'oiseaux- prédateurs de rongeurs empoisonnés ou charognards de cadavres de rongeurs empoisonnés.

L'invention vise aussi un appât rodonticides et un procédé de lutte contre des rongeurs cibles nuisibles dont la mise en oeuvre est en accord avec les règles de bon usage, notamment vis à vis de la protection des oiseaux, et en particulier des rapaces.

L'invention vise aussi un appât rodonticide et un procédé de lutte contre des rongeurs cibles nuisibles qui ne nécessitent pas, pour éradiquer une population de rongeur cibles nuisibles, d'utiliser des doses massives d'un agent rodonticide et qui est respectueux de l'environnement, de la santé humaine et des animaux non cibles -notamment des oiseaux-.

Pour ce faire, l'invention concerne une composition comprenant de la bromadiolone majoritairement sous forme d'homo-stéréo-isomère de formule 3-[3-(4'-bromo-[1,1'-biphényl]-4-yl)-3-hydroxy-1-phénylpropyl]-4-hydroxy-2H-1-benzopyran-2-one, les carbones 1 et 3 du groupement 3-hydroxy-1-phénylpropyle étant de même configuration absolue.

L'invention concerne donc une composition comprenant un stéréo-isomère de configuration de la bromadiolone, dit homo-stéréo-isomère, de formule 3-[3-(4'-bromo-[1,1'-biphényl]-4-yl)-3-hydroxy-1-phénylpropyl]-4-hydroxy-2H-1-benzopyran-2-one, dans lequel les carbones 1 et 3 du groupement 3-hydroxy-1-phénylpropyle de l'homo-stéréo-isomère sont de même configuration absolue, l'homo-stéréo-isomère étant majoritaire dans la bromadiolone.

Dans tout le texte, le terme "bromadiolone" désigne le composé 3-[3-(4'-bromo[1,1'-biphényl]-4-yl)-3-hydroxy-1-phénylpropyl]-4-hydroxy-2H-1-benzopyran-2-one ou 3-[3-[4-(4-bromophényl)phényl]-3-hydroxy-1-phénylpropyl]-2-hydroxychromèn-4-one de formule (I) ci-après :

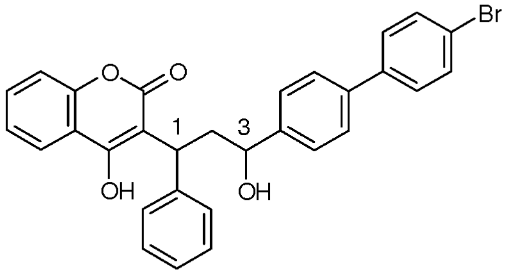

(I) ;

dans laquelle sont présentés les numéros des carbones 1 et 3 du groupement 3-hydroxy-1-phénylpropyle.

Dans tout le texte :

- on désigne par "stéréo-isomères", les isomères de même formule semi-développée, mais dont la position relative des atomes diffère dans l'espace. On désigne par "stéréo-isomères de configuration" les stéréo-isomères dont la conversion de l'un en l'autre nécessite une rupture/reformation d'une liaison covalente interatomique. Ainsi, on désigne par "stéréo-isomères de configuration" les stéréo-isomères qui ne sont pas des isomères de conformation (ou "rotamères", dont la conversion de l'un en l'autre des isomères de conformation s'accompagne uniquement d'une rotation d'une partie de la molécule selon l'axe d'une liaison σ formée par recouvrement axial d'orbitales). Un même stéréo-isomère de configuration peut être formé de l'un ou de l'autre des éventuels différents énantiomères de ce stéréo-isomère de configuration ou d'un mélange racémique ou non racémique, de ces éventuels énantiomères ;

- les configurations absolues des carbones 1 et 3 du groupement 3-hydroxy-1-phénylpropyle des stéréo-isomères de la bromadiolone sont déterminées selon la nomenclature de Cahn, Ingold et Prelog ;
- les expressions "l'homo-stéréo-isomère est majoritaire dans la bromadiolone" et "la bromadiolone est majoritairement sous forme d'homo-stéréo-isomère", signifient que la quantité (massique, molaire ou volumique) d'homo-stéréo-isomère de la bromadiolone est majoritaire -supérieure à 50 %- dans la totalité de la bromadiolone présente dans la composition (sous toutes ses formes stéréo-isomères de configuration).

Dans une composition selon l'invention, la quantité d'homo-stéréo-isomère de la bromadiolone dans la composition est majoritaire par rapport à la somme des homo-stéréo-isomère et hétéro-stéréo-isomère de la bromadiolone.

L'invention vise donc toute composition comprenant de la bromadiolone sous forme de stéréo-isomère de configuration de la bromadiolone, dit homo-stéréo-isomère, de formule 3-[3-(4'-bromo-[1,1'-biphényl]-4-yl)-3-hydroxy-1-phénylpropyl]-4-hydroxy-2H-1-benzopyran-2-one et dans lequel les carbones 1 et 3 du groupement 3-hydroxy-1-phénylpropyle sont de même configuration absolue, l'homo-stéréo-isomère étant majoritaire dans la bromadiolone.

L'invention vise donc toute composition comprenant une quantité majoritaire d'homo-stéréo-isomère de la bromadiolone par rapport à la quantité totale de bromadiolone. L'invention vise donc toute composition comprenant une proportion majoritaire d'homo-stéréo-isomère de la bromadiolone par rapport à l'ensemble des stéréo-isomères -homo-stéréo-isomère et hétéro-stéréo-isomère- de la bromadiolone. L'invention vise donc une composition dans laquelle la bromadiolone est majoritairement de l'homo-stéréo-isomère.

Dans un appât selon l'invention :

- l'homo-stéréo-isomère de la bromadiolone est présent avec une quantité de plus de 50 % par rapport à la quantité de bromadiolone ;
- la quantité d'homo-stéréo-isomère de la bromadiolone rapportée à la somme des quantités de chacun des stéréo-isomères (i) de la bromadiolone est supérieure à 0,5 (50 %) :

$$\frac{\text{Quantité d'homo–stéréo–isomère de la bromadiolone}}{\sum_i[\text{Quantité de stéréo–isomère (i) de la bromadiolone}]} > 0{,}5\ (50\%)\ ;$$

- la concentration d'homo-stéréo-isomère de la bromadiolone rapportée à la somme des concentrations de chacun des stéréo-isomères (i) de la bromadiolone est supérieure à 0,5 (50 %) :

$$\frac{[\text{homo}-\text{stéréo}-\text{isomère de la bromadiolone}]}{\sum_{i}[\text{stéréo}-\text{isomère (i) de la bromadiolone}]} > 0{,}5\ (50\%)\ ;$$

- la proportion ($p_{Homo\text{-}SI}$) d'homo-stéréo-isomère (Homo-SI) de la bromadiolone dans la composition est supérieure à la proportion de l'autre stéréo-isomère de configuration (hétéro-stéréo-isomère (Hétéro-SI)) de la bromadiolone. Dans une composition selon l'invention, la proportion d'Homo-SI de la bromadiolone dans la composition est de plus de 50 % par rapport à la bromadiolone totale.

Les inventeurs ont observé que les stéréo-isomères de configuration de la bromadiolone ne présentent pas la même rémanence hépatique chez des rongeurs cibles nuisibles et que l'homo-stéréo-isomère de la bromadiolone qui, selon EP 0 147 052, est le stéréo-isomère de configuration de la bromadiolone qui est retenu de façon plus persistante dans les tissus de mammifères non-rongeurs et dans les tissus d'espèces d'oiseaux consommant des appâts rodonticide ou des carcasses de rongeurs empoisonnés par de tels appâts, est en fait le stéréo-isomère de configuration de la bromadiolone qui est de plus faible rémanence hépatique chez des rongeurs cibles, notamment chez des rongeurs cibles nuisibles. Les inventeurs ont observé que l'homo-stéréo-isomère de la bromadiolone lorsqu'il est ingéré par un rongeur cible nuisible disparait du foie du rongeur cible nuisible ayant consommé une composition selon l'invention plus rapidement que l'hétéro-stéréo-isomère. Le rongeur cible nuisible mort ou vif ayant ingéré ladite composition est moins dangereux vis-à-vis de mammifères non-rongeurs et d'oiseaux consommant le rongeur cible nuisible et en particulier vis-à-vis de prédateurs (de mammifères non-rongeurs et d'oiseaux) qui consomment préférentiellement les viscères de leurs proies et en particulier leur foie.

Les inventeurs ont en outre observé qu'une telle composition selon l'invention comprenant majoritairement de l'homo-stéréo-isomère de la bromadiolone de moindre rémanence hépatique chez des rongeurs cibles nuisibles permet en fait de lutter efficacement contre des rongeurs cibles nuisibles.

Avantageusement, la composition peut aussi comprendre un autre stéréo-isomère de la bromadiolone, dit hétéro-stéréo-isomère, dans lequel les carbones 1 et 3 du groupement 3-hydroxy-1-phénylpropyle de la bromadiolone sont de configurations absolues distinctes. Avantageusement, ledit hétéro-stéréo-isomère de la bromadiolone est présent dans la composition avec une quantité inférieure à 50 % -notamment inférieure à 30 %, préférentiellement comprise entre 0 % et 20 %, en particulier inférieure à 10 %- par rapport à la bromadiolone. Avantageusement, la composition peut être exempte d'hétéro-stéréo-isomère de la bromadiolone.

L'invention concerne donc toute composition comprenant une quantité majoritaire d'homo-stéréo-isomère de la bromadiolone. L'invention vise donc toute composition comprenant une quantité majoritaire d'homo-stéréo-isomère de la bromadiolone par rapport à l'ensemble des stéréo-isomères -homo-stéréo-isomère et hétéro-stéréo-isomère- de configuration de la bromadiolone.

Avantageusement et selon l'invention, l'homo-stéréo-isomère est dans la composition en quantité supérieure à 50 % par rapport à la bromadiolone -notamment supérieure à 70 %, de préference comprise entre 80 % et 100 %, plus préférentiellement comprise entre 90 % et 99 %- par rapport à la bromadiolone. Avantageusement, l'homo-stéréo-isomère est dans la composition en quantité comprise entre 92 % et 97 % par rapport à la bromadiolone. Avantageusement et selon l'invention, l'homo-stéréo-isomère est dans la composition en quantité sensiblement de l'ordre de 100 % par rapport à la bromadiolone.

Avantageusement et selon l'invention, l'homo-stéréo-isomère de la bromadiolone présente une rémanence hépatique chez des rongeurs cibles inférieure à la rémanence hépatique de l'autre stéréo-isomère (hétéro-stéréo-isomère) de configuration de la bromadiolone.

Avantageusement et selon l'invention, l'homo-stéréo-isomère de la bromadiolone présente en RMN du proton dans $CDC\ell_3$ deux multiplets distincts centrés l'un à un déplacement chimique ($\delta$) de l'ordre de 2,35 ppm et l'autre à un déplacement chimique ($\delta$) de l'ordre de 3,05 ppm et correspondant chacun à l'un des deux protons méthyléniques portés par le carbone 2 du groupement 3-hydroxy-1-phénylpropyle. On distingue l'homo-stéréo-isomère et l'hétéro-stéréo-isomère de la bromadiolone en RMN du proton par la différence de déplacement chimique des deux protons méthyléniques portés par le carbone 2 du groupement 3-hydroxy-1-phénylpropyle de la bromadiolone. On distingue aussi l'homo-stéréo-isomère et l'hétéro-stéréo-isomère de la bromadiolone en RMN du proton par la différence de déplacement chimique (4,70 ppm à 4,95 ppm) des protons portés respectivement par les carbones 1 et 3 du groupement 3-hydroxy-1-phénylpropyle de la bromadiolone.

Avantageusement et selon l'invention, la proportion massique de bromadiolone est inférieure à 200 ppm (200 mg de bromadiolone par kg de composition) dans la composition. Avantageusement, la proportion massique de bromadiolone est comprise entre 10 ppm et 100 ppm (10 mg à 100 mg de bromadiolone par kg de composition), notamment comprise entre 10 ppm et 50 ppm (10 mg à 50 mg de bromadiolone par kg de composition), de préférence de l'ordre de 15 ppm (15 mg de bromadiolone par kg de composition).

Avantageusement et selon l'invention, la proportion (massique, molaire ou volumique) de bromadiolone est

comprise entre 1 ppm et $10^6$ ppm, c'est-à-dire entre 1 mg et $10^6$ mg de bromadiolone par kilogramme de composition. Il peut donc s'agir d'une composition pure constituée exclusivement de bromadiolone, ou encore une solution liquide diluée comprenant de la bromadiolone et un solvant, ou encore un prémix solide.

L'invention concerne un appât rodonticide qui comprend une composition comprenant une proportion majoritaire d'homo-stéréo-isomère de la bromadiolone et un excipient comestible. En particulier l'excipient comestible n'est pas rodonticide en lui-même et est exempt de composés rodonticides.

Avantageusement et selon l'invention, l'excipient comestible comprend au moins un aliment choisi dans le groupe formé des graines de céréale -notamment des graines de céréale décortiquées-, des moutures de graines de céréale, des farines de graines de céréale, des flocons de graines de céréale, du son de céréales et des graines non céréalières, par exemple des graines de luzerne -notamment sous forme décortiquée, sous forme de mouture, sous forme de farine, sous forme de flocons ou de son-. L'excipient comestible peut comprendre tout support susceptible d'être consommé par les rongeurs cibles nuisibles.

Avantageusement, l'excipient comestible comprend au moins un aliment choisi dans le groupe formé des aliments d'origine végétale et des aliments d'origine animale. Avantageusement, l'excipient comestible comprend au moins un aliment choisi pour stimuler l'appétit des rongeurs cibles nuisibles. En particulier, l'excipient comestible comprend au moins un aliment choisi dans le groupe formé de graines d'une ou de plusieurs céréales, de graines décortiquées d'une ou de plusieurs céréales, des moutures de graines d'une ou de plusieurs céréales, des flocons de graines d'une ou de plusieurs céréales, du son d'une ou de plusieurs céréales et des farines de graines d'une ou de plusieurs céréales. A titre d'exemple, on choisit les céréales dans le groupe formé de l'avoine, du blé, de l'orge, du maïs, du soja et du riz.

Avantageusement, l'excipient comestible comprend au moins un aliment choisi dans le groupe formé des aliments sucrés. Par exemple, il peut s'agir d'aliments comprenant au moins un sucre choisi dans le groupe formé du saccharose, du lactose, du fructose et du glucose. Il peut s'agir d'un sirop de sucre -par exemple, d'un sirop de sucre obtenu par hydrolyse de l'amidon- ou d'un sirop de sucre obtenu par hydrolyse de saccharose (sirop de sucre inverti), ou d'un sirop de sucre de betterave, ou d'un sirop d'érable ou d'un sirop de sucre de canne.

Avantageusement, l'excipient comestible comprend au moins un aliment choisi dans le groupe formé des flocons et de la farine de l'albumen de noix de coco (coprah). Avantageusement, l'excipient comestible comprend au moins un aliment choisi dans le groupe formé des noix, des noisettes et des amandes -râpées et/ou en poudre-.

Avantageusement, l'excipient comestible comprend au moins un aliment choisi dans le groupe formé des graisses végétales, des huiles végétales (par exemple huile de colza, graisse de soja, huile de tournesol, beurre de cacao, huile d'arachides, beurre d'arachides, huile de maïs, huile de palme), des graisses animales et des huiles animales (beurre, saindoux, huile de poisson).

Avantageusement, l'excipient comestible comprend au moins un aliment choisi dans le groupe formé des protéines animales. A titre d'exemple, on peut citer par exemple le lait en poudre -notamment le lait écrémé en poudre-, les oeufs -notamment les oeufs en poudre- et les hydrolysats de protéines animales.

Avantageusement et selon l'invention, la bromadiolone est présente dans l'appât avec une proportion massique inférieure à 200 ppm c'est-à-dire 200 mg de bromadiolone par kg d'appât. Avantageusement, la proportion massique de bromadiolone est comprise entre 10 ppm et 100 ppm (10 mg à 100 mg de bromadiolone par kg d'appât), notamment comprise entre 10 ppm et 50 ppm (10 mg à 50 mg de bromadiolone par kg d'appât), de préférence de l'ordre de 15 ppm (15 mg de bromadiolone par kg d'appât).

L'usage d'un appât selon l'invention comprenant une proportion majoritaire d'homo-stéréo-isomère de la bromadiolone est moins dangereux pour les espèces exposées au risque d'intoxication primaire (ingestion de l'appât selon l'invention par un enfant ou par un animal non-cible -par un chien par exemple-) dès lors que la proportion massique de bromadiolone dans l'appât est modérée et pour les espèces exposées au risque d'intoxication secondaire dès lors que le phénomène d'élimination accélérée de l'homo-stéréo-isomère dans le foie du rongeur diminue la quantité de bromadiolone résiduelle dans l'organisme d'un rongeur empoisonné -mort ou vif- susceptible d'être consommé par lesdites espèces.

Avantageusement, l'appât rodonticide se présente sous forme solide. Avantageusement, l'appât rodonticide selon l'invention peut être sous forme de boulettes, de granulés, de bloc ou de pâte susceptibles d'être consommés par les rongeurs cibles nuisibles ou d'un matériau solide susceptible d'être rongé par les rongeurs cibles nuisibles. Avantageusement, l'appât rodonticide solide selon l'invention peut se présenter sous forme d'un bloc rigide, d'un bloc semi-rigide ou d'un gel.

Avantageusement, l'appât rodonticide se présente sous forme d'une poudre. En particulier, un tel appât rodonticide est adapté pour pouvoir souiller la fourrure du(de) rongeur(s) cible(s) nuisible(s) et pour pouvoir être ingérée par celui(ceux)-ci lors de son(leur) toilettage.

Avantageusement, l'appât rodonticide peut se présenter sous forme liquide. L'appât rodonticide est alors une boisson.

Avantageusement, l'appât rodonticide comprend au moins un colorant. Un tel colorant permet en particulier de donner audit appât une couleur aisément détectable et identifiable par une personne manipulant l'appât rodonticide.

Avantageusement, l'appât rodonticide comprend au moins un conservateur apte à assurer sa conservation lors de son stockage.

Avantageusement, dans une variante particulière selon l'invention, la composition et l'appât rodonticide comprennent exclusivement de la bromadiolone à titre de substance rodonticide. En particulier, la composition et l'appât rodonticide selon l'invention sont exempts de toute autre substance anticoagulante à usage rodonticide.

Cependant, dans une autre variante selon l'invention, la composition et l'appât rodonticide peuvent comprendre une autre substance rodonticide autre que la bromadiolone et/ou toute autre substance anti-nuisible telle qu'une substance insecticide et/ou acaricide.

L'invention concerne aussi un procédé de lutte contre des rongeurs cibles nuisibles dans lequel on dissémine une quantité d'appât comprenant :

◦ de la bromadiolone majoritairement sous forme d'homo-stéréo-isomère, de formule 3-[3-(4'-bromo-[1,1'-biphényl]-4-yl)-3-hydroxy-1-phénylpropyl]-4-hydroxy-2H-1-benzopyran-2-one, les carbones 1 et 3 du groupement 3-hydroxy-1-phénylpropyle étant de même configuration absolue, et
◦ un excipient comestible pour des rongeurs cibles nuisibles.

L'invention concerne donc un procédé de lutte contre des rongeurs cibles nuisibles dans lequel on dissémine une quantité d'appât comprenant :

◦ de la bromadiolone sous forme d'un stéréo-isomère de configuration de la bromadiolone, dit homo-stéréo-isomère, de formule 3-[3-(4'-bromo-[1,1'-biphényl]-4-yl)-3-hydroxy-1-phénylpropyl]-4-hydroxy-2H-1-benzopyran-2-one, les carbones 1 et 3 du groupement 3-hydroxy-1-phénylpropyle dudit homo-stéréo-isomère étant de même configuration absolue, et
◦ un excipient comestible pour des rongeurs cibles nuisibles ; dans lequel on choisit l'appât de façon que l'homo-stéréo-isomère soit majoritaire dans la bromadiolone.

L'invention concerne donc un procédé de lutte contre des rongeurs cibles nuisibles dans lequel on dissémine une quantité d'appât rodonticide selon l'invention, c'est-à-dire d'un appât comprenant une proportion majoritaire d'homo-stéréo-isomère de la bromadiolone, ladite quantité d'appât étant suffisante pour être rodonticide. On dissémine donc une quantité d'appât comprenant majoritairement de l'homo-stéréo-isomère de la bromadiolone dans la bromadiolone, ladite bromadiolone présentant une rémanence hépatique diminuée chez le rongeur cible nuisible mais une efficacité rodonticide maintenue. Le procédé selon l'invention permet donc de limiter l'empoisonnement secondaire de mammifères non-rongeurs et d'oiseaux susceptibles de s'alimenter avec des rongeurs morts ou vifs empoisonnés mais comprenant une quantité réduite -et notamment une quantité non létale- de bromadiolone. Le procédé selon l'invention permet aussi de limiter un tel empoisonnement secondaire de mammifères non-rongeurs et d'oiseaux susceptibles de consommer préférentiellement les viscères -en particulier le foie-desdits rongeurs morts ou vifs empoisonnés.

Avantageusement et selon l'invention, l'homo-stéréo-isomère est dans l'appât en quantité supérieure à 50 % -notamment supérieure à 70 %, de préférence comprise entre 80 % et 100 %, plus préférentiellement comprise entre 90 % et 99 %- dans la bromadiolone. Avantageusement, l'homo-stéréo-isomère est dans l'appât en quantité comprise entre 92 % et 97 % par rapport à la bromadiolone. Avantageusement et selon l'invention, l'homo-stéréo-isomère est dans l'appât en quantité sensiblement de l'ordre de 100 % par rapport à la bromadiolone.

Avantageusement et selon l'invention, on choisit l'appât de façon que la bromadiolone soit présente dans l'appât avec une proportion massique inférieure à 200 ppm c'est-à-dire 200 mg de bromadiolone par kg d'appât. Avantageusement, la proportion massique de bromadiolone est comprise entre 10 ppm et 100 ppm (10 mg à 100 mg de bromadiolone par kg d'appât), notamment comprise entre 10 ppm et 50 ppm (10 mg à 50 mg de bromadiolone par kg d'appât), de préférence de l'ordre de 15 ppm (15 mg de bromadiolone par kg d'appât).

Avantageusement et en variante selon l'invention, on choisit ladite proportion massique de bromadiolone dans l'appât, en combinaison avec la quantité d'appât disséminé de façon que des rongeurs cibles nuisibles consomment une quantité d'appât au cours d'une période unique de 24 heures consécutives suffisante pour être létale pour lesdits rongeurs cibles nuisibles consommant dudit appât. Un appât selon cette variante de l'invention est un appât mortel en une seule prise ou *"one-shot"* en anglais.

Avantageusement et selon cette variante de l'invention, ladite proportion massique de bromadiolone dans l'appât est de l'ordre de 50 ppm.

Avantageusement, selon une autre variante de l'invention, on choisit ladite proportion massique de bromadiolone dans l'appât en combinaison avec la quantité d'appât disséminé de façon que des rongeurs cibles nuisible consomment une quantité de bromadiolone qui est :

- non létale pour des rongeurs cibles nuisibles consommant dudit appât pendant une période de 24 heures consécutives, et ;

- suffisante pour être létale pour des rongeurs cibles nuisibles consommant dudit appât pendant plus d'une période -notamment pendant plusieurs périodes de 24 heures consécutives-, lesdites périodes étant successives.

Cette autre variante de l'invention vise donc aussi en particulier un procédé de lutte contre des rongeurs cibles nuisibles dans lequel on dissémine une quantité d'appât létale pour des rongeurs cibles nuisibles consommant durablement cet appât et non létale pour des rongeurs ou des animaux non cibles consommant accidentellement cet appât. On parle alors d'un procédé de lutte "multi-doses" ou, en anglais, "*multi-feeding*". Dans un tel procédé selon l'invention, la consommation d'appât par un rongeur cible nuisible pendant une durée de 24 heures est insuffisante pour entrainer la mort dudit rongeur, alors qu'une consommation répétée d'appâts pendant au moins deux jours consécutifs permet d'entrainer la mort du rongeur cible nuisible.

L'invention concerne donc un procédé de lutte contre une population de rongeurs cibles nuisibles dans lequel on met à disposition des rongeurs cibles nuisibles une quantité d'appât rodonticide susceptible d'être ingérés par les rongeurs cibles nuisibles, ladite quantité d'appâts étant suffisante pour tuer des rongeurs cibles nuisibles consommant ledit appât pendant plusieurs jours.

Dans un procédé selon l'invention, on met à disposition des rongeurs cibles nuisibles une quantité d'appât suffisante pour satisfaire l'appétit des rongeurs cibles nuisibles, ledit appât comprenant une proportion majoritaire d'homo-stéréo-isomère de la bromadiolone.

Avantageusement et selon l'invention, on choisit la quantité d'appât disséminé et la proportion massique de bromadiolone dans l'appât pour permettre une ingestion quotidienne de bromadiolone par un rongeur cible nuisible comprise entre 0,20 et 10 mg par kilogramme de rongeur cible nuisible, notamment entre 0,2 et 2,0 mg par kilogramme.

Dans un procédé selon l'invention, on adapte la quantité d'appât disséminé et la proportion massique de bromadiolone dans l'appât de façon à permettre une consommation d'appât pendant plusieurs jours par des rongeurs cibles nuisibles, tout en limitant :

- les risques d'intoxication primaire de mammifères et oiseaux non cibles susceptibles de ne consommer qu'occasionnellement et accidentellement un tel appât ;
- les risques d'intoxication secondaire des prédateurs des rongeurs cibles nuisibles susceptibles de consommer un/des rongeur(s) -mort(s) ou vif(s)-cible(s) nuisible(s) ayant ingéré une quantité dudit appât.

Avantageusement et selon l'invention, on adapte la quantité d'appât disséminé, la proportion massique de bromadiolone dans l'appât et la proportion d'homo-stéréo-isomère de la bromadiolone dans la bromadiolone pour que la consommation de l'appât soit létale pour des rongeurs cibles nuisibles consommant quotidiennement de l'appât pendant au moins 2 périodes de 24 heures -notamment de 3 à 7 périodes-, lesdites périodes étant successives.

Avantageusement et selon l'invention, on adapte la quantité d'appât disséminé, la proportion massique de bromadiolone dans l'appât et la proportion d'homo-stéréo-isomère de la bromadiolone pour pouvoir atteindre dans le foie des rongeurs cibles nuisibles, au lendemain du troisième jour d'une période de trois jours consécutifs, ladite période comprenant au moins une ingestion d'appât par jour, une quantité de bromadiolone inférieure ou égale à 30 $\mu$g de bromadiolone par gramme de foie de rongeur cible nuisible.

La période de trois jours consécutifs lors de laquelle un rongeur cible nuisible ingère de l'appât peut débuter à compter d'une première ingestion d'appât par un rongeur cible nuisible. Elle peut aussi débuter à compter de la dissémination de l'appât.

L'invention concerne également une composition, un appât rodonticide et un procédé de lutte contre les rongeurs cibles nuisibles caractérisés en combinaison par tout ou partie des caractéristiques mentionnées ci-dessus ou ci-après.

D'autres buts, caractéristiques et avantages de l'invention apparaîtront à la lecture de la description suivante et des exemples donnés à titre uniquement non limitatif et qui se réfèrent aux figures annexées, dans lesquelles :

- la figure 1 est un détail d'un spectre de RMN du proton de l'hétéro-stéréo-isomère de la bromadiolone ;
- la figure 2 est un détail d'un spectre de RMN du proton de l'homo-stéréo-isomère de la bromadiolone d'une composition selon l'invention ;
- la figure 3 est un détail d'un spectre de RMN du proton d'un mélange de l'homo-stéréo-isomère et de l'hétéro-stéréo-isomère de la bromadiolone ;
- la figure 4 est une représentation graphique de l'évolution de la concentration hépatique des stéréo-isomères de configuration de la bromadiolone, et ;
- la figure 5 est une représentation graphique en histogramme de l'effet d'un procédé selon l'invention sur le temps de coagulation de rongeurs cibles.

Une composition selon l'invention comprend une proportion majoritaire d'homo-stéréo-isomère de la bromadiolone dans la bromadiolone. Les inventeurs ont découvert qu'il est possible d'obtenir un tel homo-stéréo-isomère de la bromadiolone par séparation des stéréo-isomères de configuration de la bromadiolone.

Par exemple, la chromatographie d'un mélange des stéréo-isomères de configuration de la bromadiolone sur gel de silice en couche mince ou sur colonne Nova-pak®Silica cartouche "flash" de silice avec une phase mobile formée de 70 % d'éther de pétrole et 30 % de chloroforme (débit de 1 mL/min) permet de séparer les deux stéréo-isomères de configuration de la bromadiolone.

On peut aussi séparer les deux stéréo-isomères de configuration de la bromadiolone par chromatographie HPLC sur colonne de phase inverse "LiChrospher®100 RP-18 Endcapped, Merck" d'une longueur de 250 mm et 4 mm de diamètre interne. La phase stationnaire inverse présente une granulométrie de 5 $\mu$m et une surface spécifique de 220 $m^2$/g. La phase mobile est constituée d'un mélange de méthanol (72 %) et d'eau (28 %) acidifiée avec $H_3PO_4$ 0,0025 M. Le débit de la phase mobile est de 1,0 mL/min et la détection est réalisée par spectrophotométrie à 260 nm. On détecte et on collecte l'homoséréo-isomère de la bromadiolone dont le temps de rétention est de l'ordre de 19,44 min et l'hétéro-stéréo-isomère de la bromadiolone dont le temps de rétention est de l'ordre de 21,71 min.

On peut aussi préparer l'homo-stéréo-isomère de la bromadiolone par purification par chromatographie liquide à haute performance (HPLC) dans les conditions suivantes :
- la phase immobile est une colonne de silice greffée XBRIDGE $C_{18}$, 150 mm x 4,6 mm ;
- la phase mobile est formée d'un gradient de compositions A et B dont les caractéristiques sont données au tableau 1 ci-après ;
- le débit de la phase mobile dans la phase immobile est de 1 mL/min ;
- la phase immobile est maintenue à la température de 40°C;
- la détection est réalisée par photométrie à la longueur d'onde de 265 nm ;
- le volume d'injection est de 10 $\mu$L.

Tableau 1

| Temps d'élution, min | Composition A | Composition B |
|---|---|---|
| | $H_2O$ + 0,2 % (v/v) $H_3PO_4$ | Méthanol |
| 0 | 40 % | 60 % |
| 20 | 20 % | 80 % |
| 20,1 | 40 % | 60 % |
| 25 | 40 % | 60 % |

Cette chromatographie permet de séparer l'homo-stéréo-isomère, présentant un temps de rétention de l'ordre de 17,1 minutes et un deuxième stéréo-isomère, dit hétéro-stéréo-isomère, de configuration de la bromadiolone présentant un temps de rétention de l'ordre de 17,9 minutes.

Il est cependant à noter que le remplacement du méthanol par l'acétonitrile dans la composition B de la phase mobile est de nature à inverser l'ordre d'élution de l'homo-stéréo-isomère et de l'hétéro-stéréo-isomère de la bromadiolone.

L'étude par RMN du proton ($^1$H-RMN) dans $CDC\ell_3$ des stéréo-isomères de configuration de la bromadiolone permet de confirmer que :

- le stéréo-isomère de configuration le moins retenu (temps de rétention de l'ordre de 17,1 min) présente un spectre de RMN du proton ($^1$H-RMN) dans $CDC\ell_3$, dont un détail est reproduit en figure 2, et dans lequel deux multiplets distincts centrés l'un à environ 2,35 ppm et l'autre à 3,05 ppm correspondent chacun à l'un des deux protons méthyléniques portés par le carbone 2 du groupement 3-hydroxy-1-phénylpropyle de l'homo-stéréo-isomère ;
- le stéréo-isomère de configuration le plus retenu (temps de rétention de l'ordre de 17,9 min) présente un spectre de RMN du proton ($^1$H-RMN) dans $CDC\ell_3$, dont un détail est reproduit en figure 1, et dans lequel un multiplet complexe centré à environ 2,75 ppm correspond aux deux protons méthyléniques portés par le carbone 2 du groupement 3-hydroxy-1-phénylpropyle de l'hétéro-stéréo-isomère.

Inhibition du complexe 1 de la vitamine K époxyde réductase (VKORC1) *in vitro* par l'homo-stéréo-isomère et par l'hétéro-stéréo-isomère de la bromadiolone

Le pouvoir inhibiteur de deux préparations enrichies respectivement en homo-stéréo-isomère (Homo-SI) et en hétéro-stéréo-isomère (Hétéro-SI) de la bromadiolone a été évalué en utilisant la mesure de l'activité vitamine K époxyde

réductase (VKOR, *"Vitamin K epoxide reductase"*) catalysée par des microsomes de foies de rats sensibles aux composés anti-vitamine K (AVK). Les stéréo-isomères de configuration de la bromadiolone sont partiellement purifiés par chromatographie HPLC sur gradient de composition (A/B) tel que décrit au tableau 1 ci-dessus. La préparation enrichie en Homo-SI est constituée à 96 % d'Homo-SI et à 4 % d'Hétéro-SI. La préparation enrichie en Hétéro-SI est constituée de 96 % d'Hétéro-SI et de 4 % d'Homo-SI. L'analyse des courbes d'inhibition de l'activité VKOR en fonction de la concentration en inhibiteur révèle des valeurs de constantes d'inhibition ($K_i$) de l'ordre de 30 nM pour l'Homo-SI et de l'ordre de 50 nM pour l'Hétéro-SI. Le pouvoir inhibiteur sur la cible toxicologique de chacun des deux isomères est donc similaire.

Rémanence hépatique de l'homo-stéréo-isomère (Homo-SI) et de l'hétéro-stéréo-isomère (Hétéro-SI) de la bromadiolone chez le rat

A J0, on réalise un gavage de rats de laboratoire (rats Sprague Dawley, Charles River, Saint germain sur l'Arbresle, France) de masse corporelle de l'ordre de 200 g avec une solution d'Homo-SI dans un mélange huile/DMSO ou avec une solution d'Hétéro-SI dans un même mélange huile/DMSO à raison de 3,0 mg de bromadiolone par kilogramme de rat. On maintient les rats en vie par injection sous-cutanée quotidienne d'une solution de vitamine K à raison de 0,1 U par rat. A J+1, J+3, J+7, J+14 et J+21, 4 rats sont anesthésiés par l'isoflurane puis sacrifiés, les foies sont prélevés et congelés jusqu'à analyse. L'évolution temporelle des teneurs hépatiques moyennes des stéréo-isomères de configuration "Homo-SI" (■) et "Hétéro-SI" (○) sont analysées par HPLC, données au tableau 2 ci-après et représentés en figure 4 (le symbole (■) représente l'Homo-SI et le symbole (○) représente l'Hétéro-SI).

Tableau 2

| Teneur hépatique, µg/g | J+1 | J+3 | J+7 | J+14 | J+21 |
|---|---|---|---|---|---|
| Homo-SI | 8,27 ± 2,72 | 2,34 ± 0,43 | 1,57 ± 0,21 | 0,99 ± 0,06 | 0,92 ± 0,08 |
| Hétéro-SI | 18,62 ± 2,22 | 14,70 ± 1,06 | 5,20 ± 0,75 | 2,67 ± 1,07 | 0,99 ± 0,07 |

Dès J+1, La teneur moyenne de l'Homo-SI dans le foie de rats est plus faible que la teneur moyenne de l'Hétéro-SI dans le foie de rats gavés pour une dose initiale égale de bromadiolone ingérée à J0. L'Homo-SI présente une rémanence hépatique significativement plus faible que l'Hétéro-SI.

Rémanence hépatique des stéréo-isomères de configuration Homo-SI et Hétéro-SI de la bromadiolone chez le rat mâle

On prépare les compositions enrichies en stéréo-isomères de configuration Homo-SI ou Hétéro-SI suivantes par l'une des méthodes de chromatographie décrites ci-dessus et dans lesquelles les rapports molaires sont les suivants :

- Homo-SI/Hétéro-SI ; 80/20 ;
- Homo-SI/Hétéro-SI ; 4/96.

A J0, on réalise un gavage de 16 rats de laboratoire (rats Sprague Dawley, Charles River, Saint germain sur l'Arbresle, France) mâles de masse corporelle de l'ordre de 200 g avec une dose du mélange 80/20 ou du mélange 4/96 ci-dessus à raison de 3,8 mg de bromadiolone par kilogramme de rat. On maintient les rats en vie par injection sous-cutanée quotidienne d'une solution de vitamine K. A J+1, J+3, J+5 et J+10, 4 rats sont anesthésiés par l'isoflurane puis sacrifiés, les foies sont prélevés et congelés jusqu'à analyse. Les teneurs hépatiques moyennes des isomères Homo-SI et Hétéro-SI des rats mâles sont analysées par HPLC et données au tableau 3 ci-après.

Tableau 3

| Mélanges | Bromadiolone | Teneur hépatique, µg/g | | | |
|---|---|---|---|---|---|
| | | J +1 | J + 3 | J + 5 | J + 10 |
| Mélange 80/20 | Homo-SI | 4,07 +/- 0,35 | 1,04 +/- 0,20 | 0,49 +/- 0,27 | 0,25 +/- 0,02 |
| | Hétéro-SI | 3,78 +/- 0,32 | 2,44 +/- 0,19 | 1,66+/- 0,64 | 1,08+/- 0,16 |
| | Total | 7,85 +/- 0,51 | 3,49+/-0,29 | 2,15 +/- 0,90 | 1,33 +/- 0,14 |

(suite)

| Mélanges | Bromadiolone | Teneur hépatique, µg/g | | | |
|---|---|---|---|---|---|
| | | J +1 | J + 3 | J + 5 | J + 10 |
| Mélange 4/96 | Homo-SI | 0,27 +/- 0,21 | 0,10 +/- 0,09 | 0,05 | 0 |
| | Hétéro-SI | 14,69 +/1,82 | 9,98 +/- 3,20 | 9,93 +/- 1,01 | 2,40 +/- 1,17 |
| | Total | 14,96 +/- 2,0 | 10,08 +/- 3,3 | 9,99+/- 1,0 | 2,39 +/- 1,16 |

La teneur hépatique en bromadiolone totale (7,85 µg/g) de rats mâles traités avec le mélange 80/20 (Homo-SI/Hétéro-SI) de bromadiolone à raison de 3,8 mg de bromadiolone par kilogramme de rat est, notamment à J+1, inférieure à la teneur hépatique en bromadiolone totale (14,96 µg/g) de rats mâles traités avec le mélange 4/96 (Homo-SI/Hétéro-SI) au même jour. Le mélange 80/20 est donc moins rémanent dans le foie des rats traités. Ces résultats démontrent que le stéréo-isomère Homo-SI de la bromadiolone présente une rémanence hépatique significativement plus faible que le stéréo-isomère de configuration Hétéro-SI de la bromadiolone chez le rat mâle.

Rémanence hépatique des stéréo-isomères de configuration Homo-SI et Hétéro-SI de la bromadiolone chez le rat femelle

On prépare les compositions enrichies en stéréo-isomères de configuration Homo-SI ou Hétéro-SI suivantes par l'une des méthodes de chromatographie décrites ci-dessus et dans lesquelles les rapports molaires sont les suivants :

- Homo-SI / Hétéro-SI ; 80/20 ;
- Homo-SI / Hétéro-SI ; 20/80.

On procède avec les rats femelles de la même façon qu'avec les rats mâles comme décrit ci-dessus. Les teneurs hépatiques moyennes des isomères Homo-SI et Hétéro-SI des rats femelles sont analysées par HPLC et données au tableau 4 ci-après.

Tableau 4

| Mélanges | Bromadiolone | Teneur hépatique, µg/g | | | |
|---|---|---|---|---|---|
| | | J +1 | J + 3 | J + 5 | J + 9 |
| Mélange 80/20 | Homo-SI | 19,47 | 9,05 | | 1,19 |
| | Hétéro-SI | 5,92 | 3,54 | | 1,29 |
| | Total | 25,39 | 12,6 | | 2,47 |
| Mélange 20/80 | Homo-SI | 8,43 | 2,15 | 0,87 | 0,18 |
| | Hétéro-SI | 24,02 | 22,05 | 15,55 | 7 |
| | Total | 32,45 | 24,2 | 16,42 | 7,18 |

Le stéréo-isomère de configuration Homo-SI de la bromadiolone présente une rémanence hépatique significativement plus faible que le stéréo-isomère de configuration Hétéro-SI de la bromadiolone chez le rat femelle.

Administration d'une composition enrichie en Homo-SI par ingestions multiple ("*multi-feeding*")

On administre quotidiennement par gavage et pendant trois jours (J0, J+1 et J+2) à des groupes de 3 rats de laboratoire (rats Sprague Dawley de 200 g) mâles ou femelles, une composition de bromadiolone comprenant 96 % d'Homo-SI et 4 % d'Hétéro-SI" à raison de :

- 0,05 mg de bromadiolone par kilogramme de rat, ou ;
- 0,1 mg de bromadiolone par kilogramme de rat, ou ;
- 0,25 mg de bromadiolone par kilogramme de rat, ou ;
- 0,5 mg de bromadiolone par kilogramme de rat, ou ;
- 0,75 mg de bromadiolone par kilogramme de rat.

Sur ces rats, on prélève du sang et on réalise à J+3 une mesure du temps de coagulation (temps de Quick, exprimé en secondes) du plasma au moyen du kit "Neoplastine CI Détermination of Prothrombin Time" (Diagnostica Stago, Asnière, France) par mesure sur un appareil Thrombotimer option 2 plus (Behnk Electronik, Norderstedt, Allemagne).

Les résultats obtenus sont donnés en figure 5 sur laquelle les histogrammes hachurés représentent les temps de coagulation des rats femelles et les histogrammes pleins représentent les temps de coagulation des rats mâles. A titre indicatif, la valeur normale du temps de coagulation de rats non traités est de l'ordre de 10 à 20 secondes.

L'ingestion répétée pendant 3 jours consécutivement d'une dose quotidienne de 0,25 mg du mélange enrichi (96/4) en stéréo-isomère de configuration Homo-SI de la bromadiolone est suffisant pour obtenir un effet anticoagulant, une hémorragie chez le rat (mâle ou femelle) et leur mort.

Appât comprenant 50 ppm de bromadiolone pour ingestion en plusieurs prises ("*multi-feeding*") par des rongeurs

On réalise un appât rodonticide selon l'invention par dispersion d'une quantité de bromadiolone dans une pâte à base de farine et de matière grasse végétale de façon à obtenir un appât contenant 50 mg de bromadiolone par kilogramme d'appât (50 ppm de bromadiolone). On réalise un tel appât selon l'invention avec une composition (93/7) de bromadiolone comprenant 93 % d'Homo-SI et 7 % d'Hétéro-SI. On réalise aussi à titre de comparaison des appâts comprenant :

- 2 % d'Homo-SI et 98 % d'Hétéro-SI (2/98), ou ;
- 18 % d'Homo-SI et 82 % d'Hétéro-SI (18/82).

Des rongeurs (15 rats Sprague Dawley (SD), dont 9 mâles et 6 femelles et 15 rats sauvages, dont 9 mâles et 6 femelles) sont placés dans des cages individuelles. Pendant 4 jours (J1, J2, J3 et J4), chaque rat est approvisionné avec une quantité d'appât suffisante pour satisfaire son appétit. A l'issue de ces 4 jours, une alimentation exempte d'appât est donnée. On mesure par pesée la consommation quotidienne de chaque appât. A la mort de l'animal, le foie de l'animal mort est prélevé, congelé et conservé jusqu'à l'analyse de la teneur hépatique en stéréo-isomères de configuration de la bromadiolone.

La consommation quotidienne moyenne d'appât par les rats et le délai moyen de la mort des animaux (mortalité) sont données au tableau 5 ci-après.

Tableau 5

| Homo-SI / Hétéro-SI | Masse moyenne d'appât quotidiennement consommé, g/ jour | Survenue de la mort | Mortalité, % |
|---|---|---|---|
| 93/7 | 11,45 | J4 à J9 | 100 |
| 2/98 | 11,6 | J4 à J8 | 100 |
| 18/82 | 12,25 | J4 à J9 | 100 |

Un appât selon l'invention (93/7) est consommé par des rats Sprague-Dawley ou par des rats sauvages avec la même quantité moyenne quotidienne que des appâts (2/98 ou 18/82) non enrichis en stéréo-isomère de configuration Homo-SI de la bromadiolone. Un appât selon l'invention (93/7) enrichi en stéréo-isomère de configuration Homo-SI de la bromadiolone permet d'atteindre un taux de mortalité de 100% et donc une efficacité rodonticide maximale.

Les résultats des dosages hépatiques sont présentés au tableau 6 ci-après dans lequel "Homo-SI / Hétéro-SI" représente la quantité (molaire ou massique) de l'homo-stéréo-isomère (Homo-SI) rapportée à la quantité (molaire ou massique) de l'hétéro-stéréo-isomère (Hétéro-SI) dans l'appât mis à disposition des rats et le terme "Résidu" représente le pourcentage de bromadiolone (Homo-SI et Hétéro-SI) détectée dans le foie des rats testés rapportée à la quantité totale de bromadiolone ingérée par chaque rat.

Tableau 6

| Homo-SI / Hétéro-SI | Teneur hépatique, μg/g | | Résidu, % |
|---|---|---|---|
| | Homo-SI | Hétéro-SI | |
| 93/7 | 7,26 ± 7,55 | 3,14 ± 1,03 | 3,7 ± 2,41 |
| 18/82 | 0,80 ± 0,37 | 20,16 ± 6,22 | 8,70 ± 4,83 |

(suite)

| Homo-SI / Hétéro-SI | Teneur hépatique, µg/g | | Résidu, % |
|---|---|---|---|
| | Homo-SI | Hétéro-SI | |
| 2/98 | 0 | 26,74 ± 6,04 | 10,4 ± 3,84 |

La teneur moyenne en bromadiolone dans le foie des rats morts est de 87 µg par rat traité avec l'appât Homo-SI/Hétéro-SI (93/7) selon l'invention et de 231 µg par rat traité avec l'appât Homo-SI/Hétéro-SI (2/98).

Le pourcentage de résidu de bromadiolone est minimisé par l'utilisation de l'appât bromadiolone 93/7 comprenant une proportion majoritaire d'Homo-SI en comparaison avec l'utilisation des appâts (2/98) et (18/82) comprenant une proportion majoritaire d'Hétéro-SI.

Un appât plus enrichi en Homo-SI, c'est-à-dire un appât comprenant les stéréo-isomères de configuration de la bromadiolone Homo-SI et Hétéro-SI dans une proportion de 95/5, voire 98/2 est donc de nature à limiter les résidus de bromadiolone dans le foie de rongeurs et leur toxicité secondaire vis-à-vis de prédateurs des rongeurs ou de charognards de cadavres de rongeurs.

Appât comprenant 15 ppm de bromadiolone pour ingestion en plusieurs prises ("multi-feeding")par des rongeurs

On prépare des appâts sous forme d'une pâte à base de farine et de matière grasse végétale et contenant 15 mg de bromadiolone par kilogramme d'appât (15 ppm de bromadiolone). On réalise de tels appâts avec des compositions de bromadiolone comprenant :

- 96 % d'Homo-SI et 4 % d'Hétéro-SI - (96/4), ou ;
- 2 % d'Homo-SI et 98 % d'Hétéro-SI - (2/98).

Des rongeurs (10 rats Sprague Dawley (SD), dont 5 mâles et 5 femelles) âgés de 8 semaines et de 200 g environ sont placés dans des cages individuelles. Pendant 4 jours (J1, J2, J3 et J4), chaque rat est approvisionné avec une quantité d'appât suffisante pour satisfaire son appétit. A l'issue de ces 4 jours, une alimentation exempte d'appât est donnée. On mesure par pesée la consommation quotidienne de chaque appât. A la mort de l'animal, le foie de l'animal mort est prélevé, congelé et conservé jusqu'à l'analyse de le teneur hépatique en isomères de la bromadiolone.

1. Appât Homo-SI/Hétéro-SI (96/4) à 15 ppm de bromadiolone selon l'invention

La quantité moyenne d'appât quotidiennement consommé par chacun des 10 rats SD est de 13,2 g (±3,3g). Tous les rats meurent entre J4 et J7. La quantité moyenne de bromadiolone ingérée par les rats SD est de 0,79 mg (± 0,19 mg), soit 0,76 mg (± 0,19 mg) d'Homo-SI et 0,03 mg (± 0,008 mg) d'Hétéro-SI. La teneur hépatique résiduelle moyenne de la bromadiolone totale exprimée en µg de bromadiolone par gramme de foie de rat à la mort du rat est de 10,61 µg/g. Les teneurs hépatiques résiduelles moyennes de chacun des isomères Homo-SI et Hétéro-SI à la mort des rats sont respectivement de 9,61 µg/g et 0,99 µg/g.

2. Appât Homo-SI/Hétéro-SI (2/98) à 15 ppm de bromadiolone

A titre comparatif, la quantité moyenne d'appât quotidiennement consommé par chacun des 10 rats SD est de 13,8 g (±2,4g). Les rats meurent en général entre J4 et J8, un rat mourant à J10. La quantité moyenne de bromadiolone ingérée par les rats SD est de 0,832 mg (± 0,145 mg), soit 0,016 mg (± 0,003 mg) d'Homo-SI et 0,816 mg (± 0,143 mg) d'Hétéro-SI. La teneur hépatique résiduelle moyenne de la bromadiolone totale exprimée en µg de bromadiolone par gramme de foie de rat à la mort du rat est de 18,53 µg/g. Les teneurs hépatiques résiduelles moyennes des stéréo-isomères de configuration Homo-SI et Hétéro-SI à la mort du rat sont respectivement de 0,24 µg/g et 18,29 µg/g.

Un appât comprenant une proportion majoritaire d'homo-stéréo-isomère Homo-SI de la bromadiolone permet donc de limiter la quantité de bromadiolone résiduelle dans les cadavres des rongeurs ayant consommé cet appât, tout en conservant une efficacité rodonticide soutenue par rapport à un appât comprenant une proportion majoritaire d'hétéro-stéréo-isomère Hétéro-SI de la bromadiolone.

## Revendications

1. Appât rodonticide **caractérisé en ce qu'**il comprend :

   - une composition comprenant de la bromadiolone majoritairement sous forme d'homo-stéréo-isomère de formule 3-[3-(4'-bromo-[1,1'-biphényl]-4-yl)-3-hydroxy-1-phénylpropyl]-4-hydroxy-2H-1-benzopyran-2-one, les carbones 1 et 3 du groupement 3-hydroxy-1-phénylpropyle étant de même configuration absolue, et ;
   - un excipient comestible pour des rongeurs cibles nuisibles et choisi pour permettre une consommation de la composition par des rongeurs cibles nuisibles.

2. Appât selon la revendication 1, **caractérisé en ce que** l'excipient comestible comprend au moins un aliment choisi dans le groupe formé des graines de céréale, des moutures de graines de céréale, des farines de graines de céréale, des flocons de graines de céréale, du son de céréales et des graines non céréalières.

3. Appât selon l'une des revendications 1 ou 2, **caractérisé en ce que** la bromadiolone est présente dans l'appât avec une proportion massique inférieure à 200 ppm.

4. Appât selon l'une des revendications 1 à 3, **caractérisé en ce que** l'homo-stéréo-isomère de la bromadiolone présente en RMN du proton dans $CDC\ell_3$ deux multiplets distincts centrés l'un à un déplacement chimique de l'ordre de 2,35 ppm et l'autre à un déplacement chimique de l'ordre 3,05 ppm.

5. Procédé de lutte contre des rongeurs cibles nuisibles dans lequel on dissémine une quantité d'appât comprenant :

   ◦ de la bromadiolone majoritairement sous forme d'homo-stéréo-isomère, de formule 3-[3-(4'-bromo-[1,1'-biphényl]-4-yl)-3-hydroxy-1-phénylpropyl]-4-hydroxy-2H-1-benzopyran-2-one, les carbones 1 et 3 du groupement 3-hydroxy-1-phénylpropyle étant de même configuration absolue, et
   ◦ un excipient comestible pour des rongeurs cibles nuisibles.

6. Procédé selon la revendication 5, **caractérisé en ce qu'**on choisit l'appât de façon que la bromadiolone soit présente dans l'appât avec une proportion massique inférieure à 200 ppm.

7. Procédé selon l'une des revendications 5 ou 6, **caractérisé en ce qu'**on choisit ladite proportion massique de bromadiolone dans l'appât, en combinaison avec la quantité d'appât disséminé de façon que des rongeurs cibles nuisibles consomment une quantité d'appât au cours d'une période unique de 24 heures consécutives suffisante pour être létale pour lesdits rongeurs cibles nuisibles consommant dudit appât.

8. Procédé selon l'une des revendications 5 ou 6, **caractérisé en ce qu'**on choisit ladite proportion massique de bromadiolone dans l'appât en combinaison avec la quantité d'appât disséminé de façon que des rongeurs cibles nuisible consomment une quantité de bromadiolone qui est ;

   - non létale pour des rongeurs cibles nuisibles consommant dudit appât pendant une période de 24 heures consécutives, et ;
   - suffisante pour être létale pour des rongeurs cibles nuisibles consommant dudit appât pendant plusieurs périodes consécutives de 24 heures.

9. Procédé selon la revendication 8, **caractérisé en ce qu'**on choisit la quantité d'appât disséminé et la proportion massique de bromadiolone dans l'appât pour permettre une ingestion quotidienne de bromadiolone par un rongeur cible nuisible comprise entre 0,20 et 10 mg par kilogramme de rongeur cible nuisible.

10. Procédé selon l'une des revendications 8 ou 9, **caractérisé en ce qu'**on adapte la quantité d'appât disséminé, la proportion massique de bromadiolone dans l'appât et la proportion d'homo-stéréo-isomère de la bromadiolone pour que la consommation de l'appât soit létale pour des rongeurs cibles nuisibles consommant quotidiennement de l'appât pendant au moins 2 périodes de 24 heures, lesdites périodes étant successives.

11. Procédé selon l'une des revendications 8 à 10, **caractérisé en ce qu'**on adapte la quantité d'appât disséminé, la proportion massique de bromadiolone dans l'appât et la proportion d'homo-stéréo-isomère de la bromadiolone pour pouvoir atteindre dans le foie des rongeurs cibles nuisibles, au lendemain du troisième jour d'une période de trois jours consécutifs, ladite période comprenant au moins une ingestion d'appât par jour, une quantité de bromadiolone

inférieure ou égale à 30 µg de bromadiolone par gramme de foie de rongeur cible nuisible.

**Patentansprüche**

1. Rodentizidköder, **dadurch gekennzeichnet, dass** er Folgendes umfasst:

   - eine Zusammensetzung, umfassend Bromadiolon, zum Großteil in Form eines Homostereoisomers der Formel 3-[3-(4'-Bromo-[1,1'-biphenyl]-4-yl)-3-hydroxy-1-phenylpropyl]-4-hydroxy-2H-1-benzopyran-2-on, wobei die Kohlenstoffe 1 und 3 der Gruppierung 3-Hydroxy-1-phenylpropyl die gleiche absolute Konfiguration aufweisen, und;
   - einen Trägerstoff, der für schädliche Zielnagetiere essbar und ausgewählt ist, um einen Verzehr der Zusammensetzung durch schädliche Zielnagetiere zu ermöglichen.

2. Köder nach Anspruch 1, **dadurch gekennzeichnet, dass** der essbare Trägerstoff mindestens ein Nahrungsmittel umfasst, ausgewählt aus der Gruppe, gebildet aus Getreidekörnern, Aufgüssen von Getreidekörnern, Mehlen von Getreidekörnern, Flocken von Getreidekörnern, Kleie von Getreide und Nichtgetreidekörnern.

3. Köder nach einem der Ansprüche 1 oder 2, **dadurch gekennzeichnet, dass** das Bromadiolon im Köder in einem Massenverhältnis von weniger als 200 ppm vorhanden ist.

4. Köder nach einem der Ansprüche 1 bis 3, **dadurch gekennzeichnet, dass** das Homostereoisomer des Bromadiolons in der Kernspintomografie des Protons in $CDC\ell_3$ zwei verschiedene Multipletts aufweist, von denen eines in einer chemischen Verschiebung im Bereich von 2,35 ppm und das andere in einer chemischen Verschiebung im Bereich von 3,05 ppm zentriert ist.

5. Verfahren zum Kampf gegen schädliche Zielnagetiere, wobei eine Menge von Köder verstreut wird, umfassend:

   o Bromadiolon, zum Großteil in Form eines Homostereoisomers der Formel 3-[3-(4'-Bromo-[1,1'-biphenyl]-4-yl)-3-hydroxy-1-phenylpropyl]-4-hydroxy-2H-1-benzopyran-2-on, wobei die Kohlenstoffe 1 und 3 der Gruppierung 3-Hydroxy-1-phenylpropyl die gleiche absolute Konfiguration aufweisen, und
   o einen Trägerstoff, der für die schädlichen Zielnagetiere essbar ist.

6. Verfahren nach Anspruch 5, **dadurch gekennzeichnet, dass** der Köder derart gewählt wird, dass das Bromadiolon im Köder in einem Massenverhältnis von weniger als 200 ppm vorhanden ist.

7. Verfahren nach einem der Ansprüche 5 oder 6, **dadurch gekennzeichnet, dass** das Massenverhältnis von Bromadiolon im Köder in Kombination mit der Menge von verstreutem Köder derart gewählt wird, dass schädliche Zielnagetiere eine Menge Köder im Laufe eines einzigen Zeitraums von 24 aufeinander folgenden Stunden verzehren, die ausreichend ist, um für die schädlichen Zielnagetiere, die den Köder verzehren, tödlich zu sein.

8. Verfahren nach einem der Ansprüche 5 oder 6, **dadurch gekennzeichnet, dass** das Massenverhältnis von Bromadiolon im Köder in Kombination mit der Menge von verstreutem Köder derart gewählt wird, dass schädliche Zielnagetiere, eine Menge von Bromadiolon verzehren, die;

   - für schädliche Zielnagetiere, die den Köder verzehren, während eines Zeitraums von 24 aufeinander folgenden Stunden nicht tödlich ist, und;
   - ausreichend ist, um für schädliche Zielnagetiere, die den Köder während mehrerer aufeinander folgender Zeiträume von 24 Stunden verzehren, tödlich zu sein.

9. Verfahren nach Anspruch 8, **dadurch gekennzeichnet, dass** die Menge von verstreutem Köder und das Massenverhältnis von Bromadiolon im Köder gewählt werden, um eine tägliche Aufnahme von Bromadiolon durch ein schädliches Zielnagetier zu ermöglichen, die im Bereich zwischen 0,20 und 10 mg pro Kilogramm schädlichem Zielnagetier liegt.

10. Verfahren nach einem der Ansprüche 8 oder 9, **dadurch gekennzeichnet, dass** die Menge von verstreutem Köder, das Massenverhältnis von Bromadiolon im Köder und die Proportion von Homostereoisomer des Bromadiolons angepasst werden, damit der Verzehr des Köders für schädliche Zielnagetiere, die täglich während mindestens 2

Zeiträumen von 24 Stunden Köder verzehren, tödlich ist, wobei die Zeiträume aufeinander folgend sind.

**11.** Verfahren nach einem der Ansprüche 8 bis 10, **dadurch gekennzeichnet, dass** die Menge von verstreutem Köder, das Massenverhältnis von Bromadiolon im Köder und die Proportion von Homostereoisomer des Bromadiolons angepasst werden, um in der Leber der schädlichen Zielnagetiere am Tag nach dem dritten Tag eines Zeitraums von drei aufeinander folgenden Tagen, wobei der Zeitraum mindestens eine Aufnahme von Köder pro Tag umfasst, eine Menge Bromadiolon von weniger als oder gleich wie 30 $\mu$g Bromadiolon pro Gramm Leber eines schädlichen Zielnagetiers erreichen zu können.

**Claims**

**1.** Rodenticidal bait, **characterised in that** it comprises:

- a composition comprising bromadiolone in a majority in the form of the homostereoisomer of the formula 3-[3-(4'-bromo-[1,1'-biphenyl]-4-yl)-3-hydroxy-1-phenylpropyl]-4-hydroxy-2H-1-benzopyran-2-one, carbon atoms 1 and 3 of the 3-hydroxy-1-phenylpropyl grouping having the same absolute configuration, and;
- an excipient which is edible for the target rodent pests and chosen in order to allow eating of the composition by the target rodent pests.

**2.** Bait according to claim 1, **characterised in that** the excipient which is edible comprises at least one food chosen from the group formed by cereal grains, ground cereal grains, cereal grain flours, cereal grain flakes, cereal bran and non-cereal grains.

**3.** Bait according to one of claims 1 or 2, **characterised in that** the bromadiolone is present in the bait with a proportion by weight of less than 200 ppm.

**4.** Bait according to one of claims 1 to 3, **characterised in that** the homostereoisomer of bromadiolone has, in proton NMR in $CDCl_3$, two distinct multiplets, one centred at a chemical shift of the order of 2.35 ppm and the other at a chemical shift of the order of 3.05 ppm.

**5.** Method of combating target rodent pests, in which an amount of bait comprising:

◦ bromadiolone in a majority in the form of the homostereoisomer of the formula 3-[3-(4'-bromo-[1,1'-biphenyl]-4-yl)-3-hydroxy-1-phenylpropyl]-4-hydroxy-2H-1-benzopyran-2-one, carbon atoms 1 and 3 of the 3-hydroxy-1-phenylpropyl grouping having the same absolute configuration, and
◦ an excipient which is edible for the target rodent pests,

is scattered.

**6.** Method according to claim 5, **characterised in that** the bait is chosen such that bromadiolone is present in the bait in a proportion by weight of less than 200 ppm.

**7.** Method according to one of claims 5 or 6, **characterised in that** said proportion by weight of bromadiolone in the bait is chosen in combination with the amount of bait scattered such that the target rodent pests eat an amount of bait in the course of a single period of 24 consecutive hours sufficient to be lethal to said target rodent pests which eat said bait.

**8.** Method according to one of claims 5 or 6, **characterised in that** said proportion by weight of bromadiolone in the bait is chosen in combination with the amount of bait scattered such that the target rodent pests eat an amount of bromadiolone which is:

- non-lethal to the target rodent pests which eat said bait during a period of 24 consecutive hours, and;
- sufficient to be lethal to the target rodent pests which eat said bait during several periods of 24 consecutive hours.

**9.** Method according to claim 8, **characterised in that** the amount of bait scattered and the proportion by weight of bromadiolone in the bait are chosen to allow a daily ingestion of bromadiolone by a target rodent pest of between 0.20 and 10 mg per kilogram of target rodent pest.

**10.** Method according to one of claims 8 or 9, **characterised in that** the amount of bait scattered, the proportion by weight of bromadiolone in the bait and the proportion of the homostereoisomer of bromadiolone are adjusted such that eating of the bait is lethal to the target rodent pests eating the bait daily during at least 2 periods of 24 hours, said periods being successive.

**11.** Method according to one of claims 8 to 10, **characterised in that** the amount of bait scattered, the proportion by weight of bromadiolone in the bait and the proportion of the homostereoisomer of bromadiolone are adjusted in order to be able to achieve in the liver of the target rodent pests on the day following the third day of a period of three consecutive days, said period comprising at least one ingestion of bait per day, an amount of bromadiolone of less than or equal to 30 $\mu$g of bromadiolone per gram of liver of the target rodent pest.

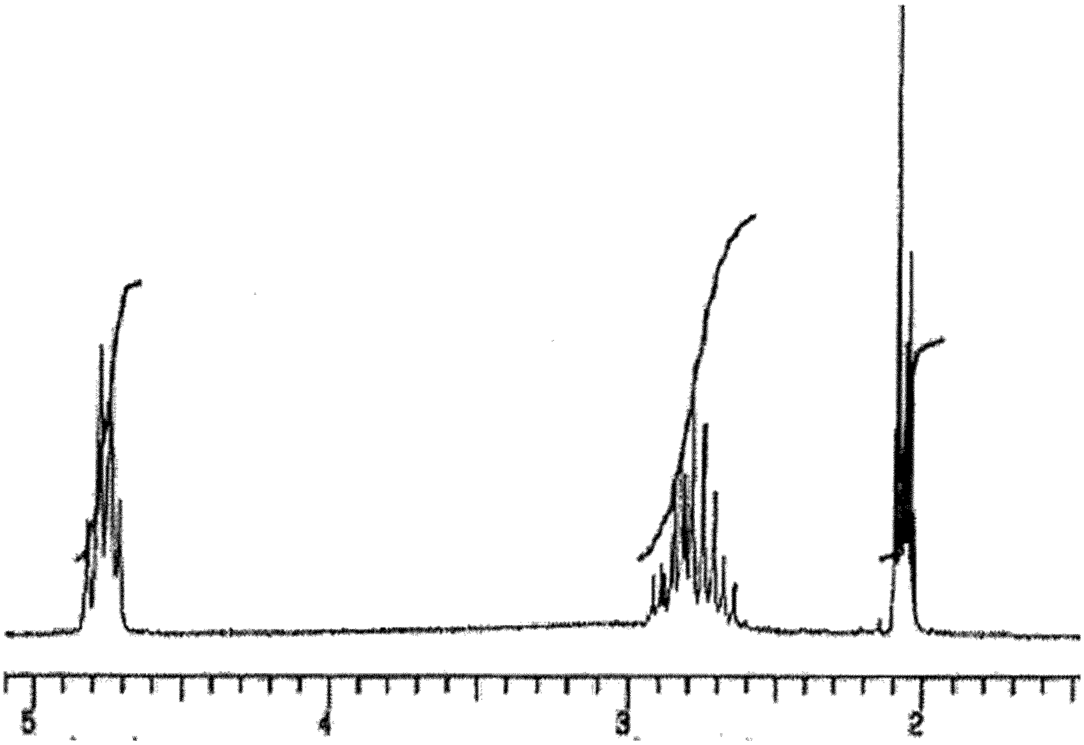


Fig 1

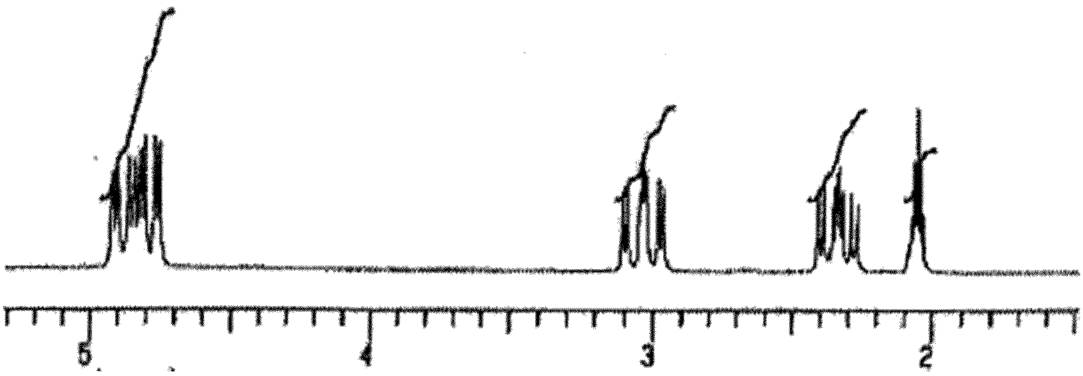


Fig 2

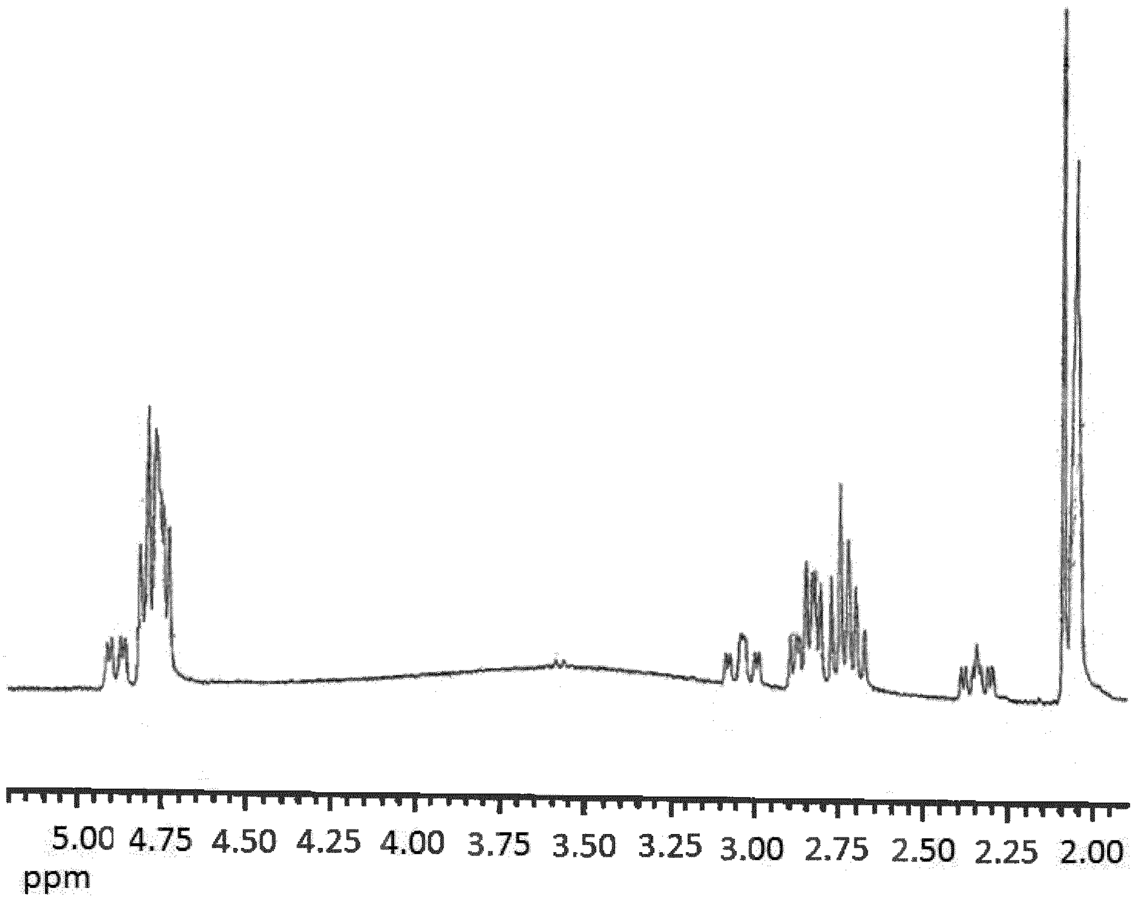
5.00
4.75
4.50
4.25
4.00
3.75
3.50
3.25
3.00
2.75
2.50
2.25
2.00
ppm

Fig 3

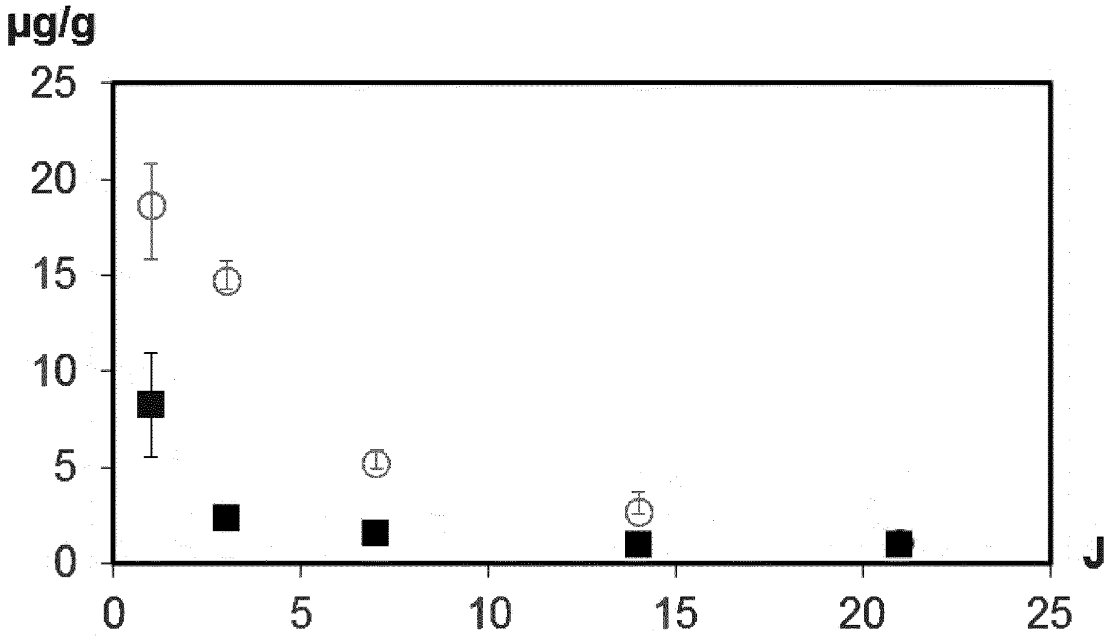
µg/g
25
20
15
10
5
0
0
5
10
15
20
25
J

Fig 4

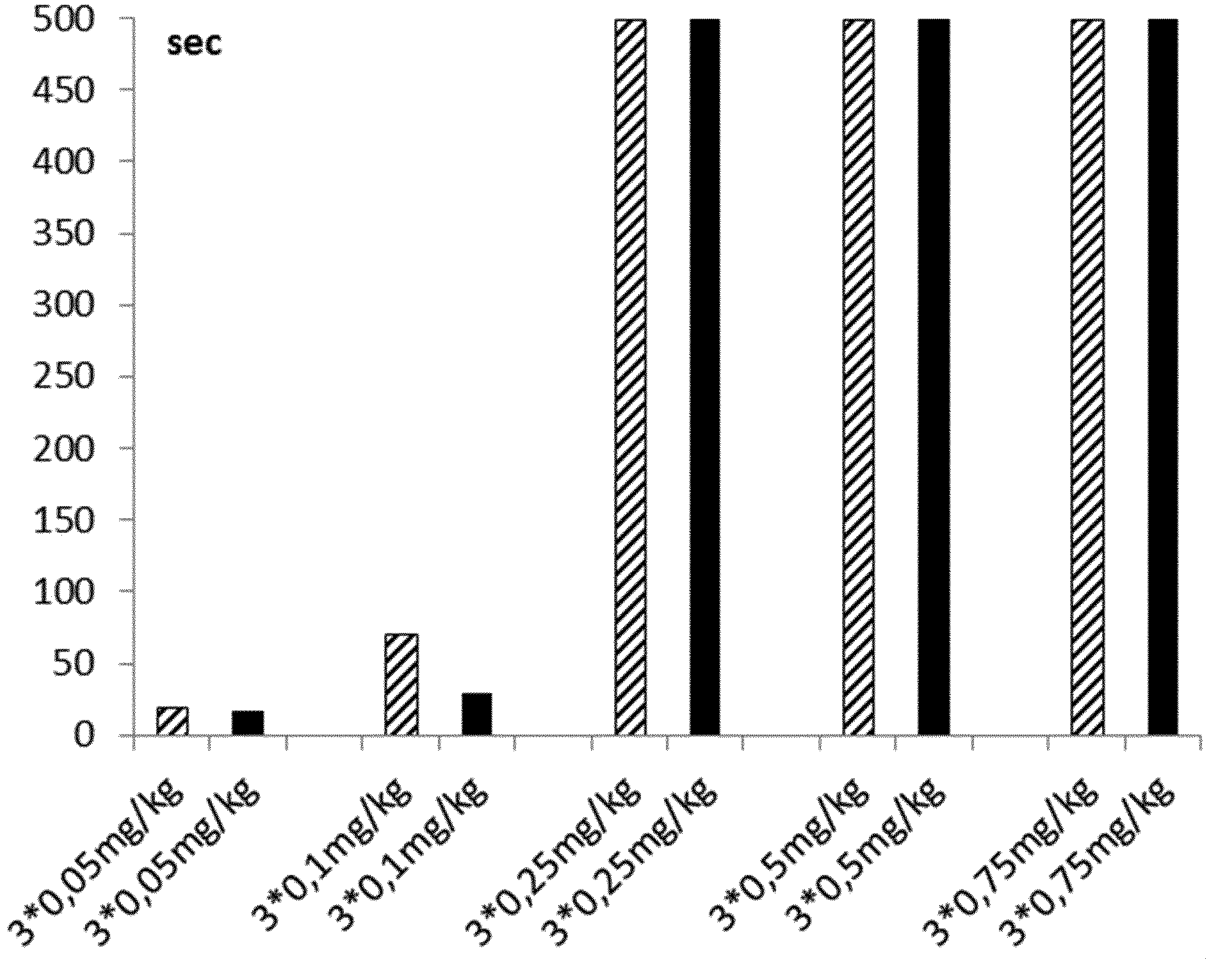
sec
500
450
400
350
300
250
200
150
100
50
0
3*0,05mg/kg
3*0,05mg/kg
3*0,1mg/kg
3*0,1mg/kg
3*0,25mg/kg
3*0,25mg/kg
3*0,5mg/kg
3*0,5mg/kg
3*0,75mg/kg
3*0,75mg/kg

Fig 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 2090164 A
- EP 0147052 A